# EUROPÄISCHE PATENTSCHRIFT

(11) **EP 3 017 334 B1**
(45) Veröffentlichungstag und Bekanntmachung des Hinweises auf die Patenterteilung: **04.03.2020**
(21) Anmeldenummer: 14735564.8
(22) Anmeldetag: 03.07.2014
(51) Int. Cl.: G02B 21/22, G02B 21/36, G02B 27/00, H04N 13/106

(54) **BILDERFASSUNGSVERFAHREN FÜR MIKROSKOPSYSTEM UND ENTSPRECHENDES MIKROSKOPSYSTEM**
IMAGE CAPTURE METHOD FOR MICROSCOPE SYSTEM AND CORRESPONDING MICROSCOPE SYSTEM
PROCÉDÉ D'ACQUISITION D'IMAGES POUR UN SYSTÈME DE MICROSCOPE ET SYSTÈME DE MICROSCOPE ASSOCIÉ

(30) Priorität: 04.07.2013 DE 102013213091
(43) Veröffentlichungstag der Anmeldung: 11.05.2016
(73) Patentinhaber: Leica Microsystems (Schweiz) AG, 9435 Heerbrugg (CH)
(72) Erfinder: SCHNITZLER, Harald, CH-9450 Lüchingen (CH)
(74) Vertreter: Bradl, Joachim
(86) Internationale Anmeldenummer: PCT/EP2014/064154
(87) Internationale Veröffentlichungsnummer: WO 2015/001007

(56) Entgegenhaltungen:
- WO-A1-97/25690
- US-A1- 2007 047 072
- US-A1- 2007 047 073
- US-A1- 2012 189 293

## Beschreibung

Die vorliegende Erfindung betrifft ein Verfahren zur Bilderfassung mit einem Mikroskopsystem, das Mittel zur Bereitstellung mikroskopischer Bilder bei unterschiedlichen numerischen Aperturen aufweist, sowie ein Mikroskopsystem.

### Stand der Technik

Bekannte Mikroskope, beispielsweise Stereomikroskope mit optischen Zooms, sind häufig mit Mitteln zur physikalischen Begrenzung des Strahlenbündels und damit zur Einstellung des Pupillendurchmessers bzw. der numerischen Apertur eingerichtet. Beispielsweise können zu diesem Zweck starre oder variable Aperturblenden (z.B. Irisblenden oder LCD-Blenden) und/oder geeignete Strahlbegrenzer an Linsen und Linsenfassungen vorgesehen sein.

Die vorliegende Erfindung betrifft sowohl Mikroskope, bei denen die numerische Apertur eines oder mehrerer optischer Kanäle mittels geeigneter Aperturblenden variabel einstellbar ist, als auch Mikroskope, die zwei oder mehrere getrennte optische Kanäle mit einer jeweils starren Aperturblende aufweisen. In beiden Fällen handelt es sich um Mikroskopsysteme, die Mittel zur Bereitstellung mikroskopischer Bilder bei unterschiedlichen numerischen Aperturen aufweisen.

Die numerische Apertur bestimmt drei wesentliche Kenngrößen einer optischen Abbildung, nämlich Auflösung, Helligkeit und Schärfentiefe:
Das maximale Auflösungsvermögen eines Mikroskops in der Fokusebene des Objektivs wird durch die Lichtbeugung begrenzt, welche wiederum durch die numerische Apertur des Abbildungssystems bestimmt wird. Das maximale Auflösungsvermögen R, angegeben in Linienpaaren pro Millimeter (LP/mm), ist zur numerischen Apertur nA proportional. Es gilt vereinfacht R = 3.000 x nA. Eine hohe Auflösung erfordert daher eine hohe numerische Apertur.

Gleichzeitig aber ist bei der Betrachtung von nicht vollkommen ebenen Objekten auch die Schärfentiefe wichtig, d.h. die Schärfe der Objektbereiche, die außerhalb der Fokusebene liegen. Diese nimmt aus geometrischen Gründen mit steigender numerischer Apertur ab und folgt der numerischen Apertur reziprok. Für den visuellen Einblick wird die Schärfentiefe DOF durch die empirische Formel von Berek beschrieben. Nach dieser gilt DOF = λ / (2 × nA²) + 0.34 / (Mₜₒₜ × nA), wobei λ die Wellenlänge des Lichts und Mₜₒₜ die totale visuelle Vergrösserung bezeichnen. Die Wellenlänge λ und die Schärfentiefe DOF werden beispielsweise in mm angegeben. Eine hohe Schärfe in Bildbereichen ober- oder unterhalb der Fokusebene erzielt man hiernach mit verringerten numerischen Aperturen.

Der erfasste Lichtkegel bestimmt die Helligkeit I. Vereinfacht gilt I = c × nA², wobei c eine Konstante darstellt. Eine hohe Bildhelligkeit erzielt man damit wiederum mit hoher numerischer Apertur. Die Bildhelligkeit kann jedoch, insbesondere bei digitaler Bilderfassung, außer durch die numerische Apertur auch durch die Belichtungszeit, den elektrischen Verstärkungsfaktor (Gain), optische Filter oder digitale Nachbearbeitung flexibel eingestellt und angepasst werden. Diese Anpassungen sind dem Fachmann bekannt und werden daher nicht weiter erläutert.

Zumindest hinsichtlich Auflösung und Schärfentiefe besteht jedoch bei herkömmlichen Mikroskopen ein Zielkonflikt.

Aus der DE 10 2006 036 300 B4 und der DE 10 2006 036 768 B4 sind Stereomikroskope vom Teleskop- bzw. Greenough-Typ bekannt, welche dem Beobachter ein Bildpaar darbieten, dessen Einzelbilder unterschiedlich gut aufgelöst sind (nachfolgend auch als "asymmetrische" Stereomikroskope bezeichnet). Eines der Einzelbilder besitzt eine höhere numerische Apertur und daher eine höhere Auflösung in der Fokusebene, während das andere Einzelbild mit niedrigerer numerischer Apertur eine bessere Schärfentiefe bietet. Diese Bilder werden durch die beiden Augen des Beobachters zeitgleich empfangen. Durch das Gehirn werden die Bildpaare derart zusammengesetzt, dass der Beobachter das jeweils besser aufgelöste Detail aus den beiden Bildern wahrnimmt. Es wird damit ein physiologisches Phänomen bei der Bildfusion im menschlichen Gehirn ausgenutzt.

Weitere Mikroskope sind aus der US 2007/0047072 A1 und US 2007/0047073 A1 bekannt.

Digitale Bildaufnahmeeinrichtungen leisten diese Bildfusion nicht und nutzen nur die Aufnahme eines Bildes mit fester Apertur. Sie erfassen meist genau ein Bild, basierend auf einer Strahlgeometrie und der damit festgelegten Auflösung und Schärfentiefe. Die Schärfenbereiche von Aufnahmen derartiger digitaler Bildaufnahmeeinrichtungen, also die Bereiche, in denen ein entsprechendes Objekt scharf abgebildet wird, sind daher deutlich enger begrenzt. Im Vergleich zu einem visuellen stereoskopischen Bildeindruck durch ein Stereomikroskop ist dies nicht zufriedenstellend. Durch die Eigenschaft des menschlichen Auges, auf bis zu ± 5 Dioptrien zu akkommodieren, entsteht bei digitalen Bildaufnahmen gegenüber visuellen Betrachtungen ferner ein multiplikatorischer Nachteil.

Der Stand der Technik bei konventionellen Weitfeld-Mikroskopen (ohne Stereostrahlengänge) adressiert diese Probleme durch sogenanntes z-Stacking, wobei die Fokuslage des Mikroskops während der Aufnahme einer Bildsequenz schrittweise verschoben wird. Dies erfordert aber entweder das Bewegen des Objekttisches mit dem Objekt oder das Bewegen des Mikroskops gegenüber dem Objekt. In jedem Fall muss eine erhebliche Masse bewegt werden (Mikroskop am z-Trieb oder Probentisch), was den Ablauf apparativ wie zeitlich aufwändig macht. Der zeitliche Aufwand wiederum verhindert die Umsetzung als Livebild, was insbesondere bei einer Bewegung des Benutzers in x-, y- und z-Richtung sowie bei der Beobachtung lebender Zellen nachteilig ist.

Außerdem verändert sich bei (normalerweise) nicht telezentrischen Aufnahmebedingungen der Abbildungsmaßstab des Objekts bei Veränderung der Fokuslage. Die durch z-Stacking aufgenommenen Bilder überlagern sich daher aufgrund der Variation des Abbildungsmaßstabs nicht exakt und müssen durch Korrelation oder Dehnung bzw. Stauchung einander angepasst werden. Dieser Vorgang beinhaltet Unsicherheiten und Fehlermöglichkeiten für das zusammenzufügende Bild.

Insbesondere im Hinblick auf den derzeit zu beobachtenden starken Trend zur Digitalmikroskopie ist es Aufgabe der Erfindung, die genannten Nachteile zu überwinden und eine verbesserte Bilderfassung zu ermöglichen.

### Offenbarung der Erfindung

Die Erfindung schlägt vor diesem Hintergrund ein Verfahren zur Bereitstellung eines digitalen Ergebnisbilds mit einem Mikroskopsystem, das Mittel zur Bereitstellung mikroskopischer Bilder bei unterschiedlichen numerischen Aperturen sowie eine digitale Bilderfassungseinheit aufweist, sowie ein Mikroskopsystem mit den Merkmalen der unabhängigen Patentansprüche vor. Bevorzugte Ausgestaltungen sind jeweils Gegenstand der abhängigen Patentansprüche sowie der nachfolgenden Beschreibung.

### Vorteile der Erfindung

Die Erfindung betrifft das Aufnehmen und Zusammenführen von mikroskopischen Bildern mit unterschiedlicher Auflösung und Schärfentiefe, die bei unterschiedlichen numerischen Aperturen bereitgestellt werden. Die Erfindung ermöglicht sowohl eine Erkennung feinster Strukturen als auch eine topographische Beschreibung eines Objekts mit größtmöglicher Qualität und geringem Aufwand.

Die Erfindung sieht insgesamt ein Verfahren zur Bereitstellung eines digitalen Ergebnisbilds unter Verwendung eines Mikroskopsystems vor, wobei das Mikroskopsystem Mittel zur Bereitstellung mikroskopischer Bilder bei unterschiedlichen numerischen Aperturen sowie eine digitale Bilderfassungseinheit aufweist. Das Verfahren umfasst, mittels der digitalen Bilderfassungseinheit zumindest zwei mikroskopische Bilder bei unterschiedlichen numerischen Aperturen in Form digitaler Einzelbilder zu erfassen und einander entsprechende Bildbereiche der digitalen Einzelbilder hinsichtlich ihrer Bildschärfe miteinander zu vergleichen. Jeweils die Bildbereiche mit der höchsten Bildschärfe werden zu dem digitalen Ergebnisbild zusammengesetzt. Dieses weist aufgrund der erfindungsgemäßen Erstellung in einer größeren Anzahl von Bildbereichen eine höhere Bildschärfe auf als jedes der digitalen Einzelbilder, aus dem die Bildbereiche ausgewählt wurden. Es besitzt damit auch eine höhere Gesamtschärfe als die digitalen Einzelbilder und vereinigt vorteilhafterweise die schärfsten Bereiche der digitalen Einzelbilder.

Wie bereits angesprochen, kann es sich bei den "Mitteln zur Bereitstellung mikroskopischer Bilder bei unterschiedlichen numerischen Aperturen" beispielsweise um einen oder mehrere optische Kanäle, beispielsweise Stereokanäle eines Stereomikroskops, handeln, in denen jeweils mittels geeigneter Aperturblenden die numerische Apertur variabel einstellbar ist. Auch Mikroskope, die zwei oder mehrere getrennte optische Kanäle mit einer jeweils starren Aperturblende oder ohne Aperturblenden, aber mit unterschiedlichen numerischen Aperturen, aufweisen, besitzen demgemäß Mittel zur Bereitstellung mikroskopischer Bilder bei unterschiedlichen numerischen Aperturen.

Im Gegensatz zu bekannten Verfahren können mittels der vorliegenden Erfindung verbesserte Ergebnisbilder erzeugt werden, deren Informationsgehalt beträchtlich über jenen von reinen (Einzelbild-)Sequenzen hinausgeht, und die dennoch mit verringertem Aufwand erhalten werden können. Im Gegensatz zu den vorstehend genannten Verfahren des Standes der Technik eignet sich die vorliegende Erfindung insbesondere auch zum Einsatz in "einkanaligen" Mikroskopen, bzw. für die Bilderfassung über nur einen Kanal eines Stereomikroskops, wenn hier jeweils zumindest eine einstellbare Aperturblende vorgesehen ist. Mit der vorliegenden Erfindung lassen sich daher mit vergleichsweise geringem apparativem Aufwand hochqualitative Ergebnisbilder erzeugen.

Insbesondere gegenüber dem aus der Mikroskopie bekannten und eingangs erläuterten z-Stacking müssen im Rahmen der vorliegenden Erfindung keine nennenswerten Massen bewegt werden. Die Erfindung sieht im ungünstigsten Fall allenfalls die Verstellung einer Aperturblende zwischen der Aufnahme unterschiedlicher digitaler Einzelbilder vor. Ist eine zweikanalige Aufnahme - mit unterschiedlichen numerischen Aperturen in den einzelnen Kanälen - möglich, ist auch dies nicht notwendig, so dass in diesem Fall überhaupt keine Teile des Mikroskops bewegt werden müssen.

Die "zumindest zwei mikroskopischen Bilder", die mit einer verstellbaren Aperturblende erhalten und mittels der digitalen Bilderfassungseinheit in Form der entsprechenden digitalen Einzelbilder erfasst werden, können auch als "Blendenserie" bezeichnet werden. Eine sinnvolle Anzahl für die "zumindest zwei" digitalen Einzelbilder richtet sich nach den jeweils eingestellten Mikroskopparametern, beispielsweise der verwendeten Vergrößerung, die wiederum die Schärfentiefe definiert. Beispielsweise können zwei, vier, sechs, acht, zehn, 15 oder 20 Einzelbilder aufgenommen werden. Ein weiterer Parameter, der die Anzahl der aufzunehmenden digitalen Einzelbilder bestimmt, ist hier die Anzahl der einstellbaren Blendenöffnungen, d.h. der Positionen einer Stelleinrichtung einer entsprechenden Aperturblende und die hierdurch bewirkbaren Blendenöffnungen.

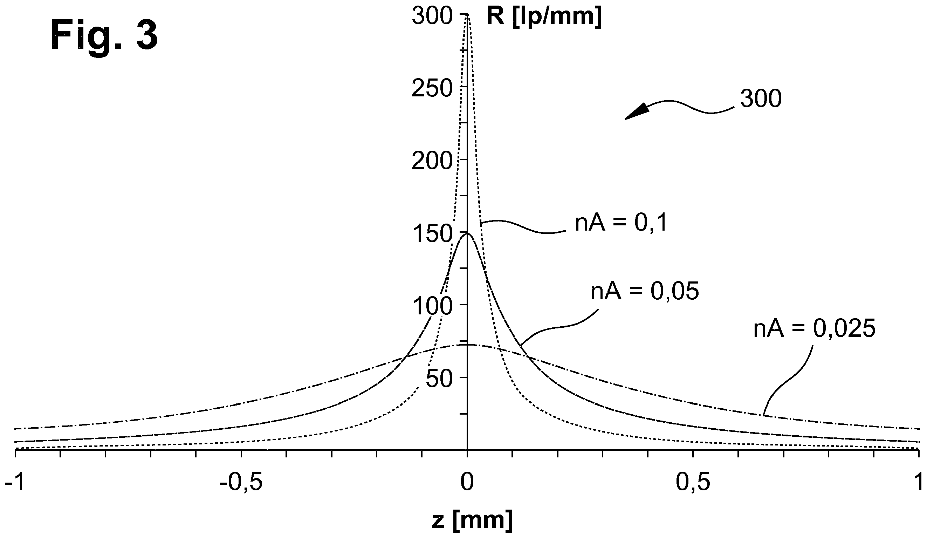

Erfindungsgemäß ist also vorgesehen, wenigstens zwei Einzelbilder, die bei unterschiedlichen numerischen Aperturen bereitgestellt werden, digital aufzunehmen und zu einem digitalen Ergebnisbild zusammenzufügen. Die digitale Bildaufnahme erfolgt beispielsweise mit dem CCD-Chip einer Kamera oder einem Zeilensensor. Die Erfindung kann auch beispielsweise umfassen, digitale Einzelbilder mehrfach bei einer Blendenstellung oder mehrfach in einem Kanal mit fester numerischer Apertur aufzunehmen. Hierdurch kann beispielsweise eine Auflösungsverbesserung erzielt werden, weil Rauscheffekte des verwendeten Bildsensors verringert werden. Zumindest zwei der Einzelbilder werden jedoch bei unterschiedlichen numerischen Aperturen bereitgestellt, so dass sich, wie unten unter Bezugnahme auf die beigefügte Figur 3 näher erläutert, sowohl die Vorteile der hohen Auflösung bei hoher numerischer Apertur als auch der großen Tiefenschärfe bei geringer numerischer Apertur kombinieren lassen.

Die Erfindung bietet auch insbesondere Vorteile gegenüber dem aus der Fotografie bekannten HDR-Verfahren (High Dynamic Range), bei dem mehrere Aufnahmen zu einem "Super-Bild" mit erhöhtem Helligkeits- und Kontrastumfang zusammengefügt werden. HDR-Verfahren betreffen jedoch nur die lokale Bildbelichtung, nicht die Bildschärfe. Gleichwohl können auch HDR-Verfahren im Rahmen der vorliegenden Erfindung verwendet werden, wodurch zusätzliche Bildinformationen erhalten werden können.

In der Fotografie wird mit der Wahl der Blende die Schärfentiefe lediglich als bildgestaltendes Mittel eingesetzt. Die optischen Verhältnisse in der Mikroskopie sind jedoch von jenen der Fotografie grundlegend verschieden, da die Schärfe in der Fotografie nicht durch die Beugung begrenzt wird. Ein Schließen der Blende in der Fotografie bedeutet daher keine Abnahme der Auflösung in der Fokusebene, wie es in der Mikroskopie zu beobachten ist. In der Fotografie wird vielmehr bei quasi gleichbleibender Auflösung in der Fokusebene eine Zunahme in der Schärfentiefe erzielt. In der Fotografie stellt sich daher nicht das Problem einer verringerten Auflösung. Daher ist es in der Fotografie zur Erzielung einer maximalen Auflösung und Schärfentiefe lediglich erforderlich, eine Blende entsprechend weit zu schließen. Fotografische und mikroskopische Strahlengänge sowie Bildaufnahme- und Bildverarbeitungsmöglichkeiten sind grundlegend unterschiedlich und unterliegen unterschiedlichen physikalischen Gesetzen, Grenzen und Anforderungen.

Das Erstellen des Ergebnisbilds des Mikroskops umfasst, wie erwähnt, die unterschiedlichen Bildbereiche, die zum Zusammensetzen des Ergebnisbilds verwendet werden, auf Grundlage eines Vergleichs ihrer Bildschärfe auszuwählen. Hierzu können beispielsweise jeweils lokale Kontrastwerte oder andere, die Bildschärfe kennzeichnende Werte eingesetzt werden. Hierbei kann es sich beispielsweise auch um eine numerische Kennzahl (Score) handeln, die einen Bildkontrast oder eine Bildschärfe in einem Bildbereich eines digitalen Einzelbilds angibt. Da ein Vergleich zwischen den digitalen Einzelbildern vorgenommen wird, kann diese Kennzahl auch als Prozentwert oder relativer Wert (beispielsweise bezogen auf das erste entsprechend untersuchte digitale Einzelbild oder jenes mit der höchsten Bildschärfe) ausgedrückt werden. Das erfindungsgemäße Verfahren kann damit sehr rasch mittels bekannter Bildverarbeitungsalgorithmen durchgeführt werden, die beispielsweise in der Bilderfassungseinrichtung selbst und/oder in einem diese ansteuernden Steuerrechner implementiert sein können.

Der genannte Vergleich kann durch weitere Verfahrensschritte ergänzt werden. So können die digitalen Einzelbilder auch mittels geeigneter Bildauswerteverfahren untersucht werden, wobei für die Bildbereiche oder das gesamte Einzelbild jeweils entsprechende Werte bestimmt werden, die die Bildschärfe kennzeichnen. Übersteigen diese beispielsweise einen minimalen Vorgabewert oder erreichen diese ein auf einem Anzeigesystem darstellbares Maß, wird sinnvollerweise kein Vergleich mehr vorgenommen. Hierdurch kann im Sinne einer dynamischen Bildanzeige Verarbeitungszeit eingespart werden.

Besonders schnell kann ein entsprechendes Verfahren durchgeführt werden, wenn die einander entsprechenden Bildbereiche auf Grundlage einer vorgegebenen Lage in den zumindest zwei digital erfassten Einzelbildern festgelegt werden. Beispielsweise kann jedes der digitalen Einzelbilder in identischer Weise in beliebige Pixelblöcke, beispielsweise mit 5 x 5, 10 x 10, 50 x 50 oder 100 x 100 Pixeln (oder entsprechende nichtquadratische Pixelblöcke) unterteilt werden. Jeder Pixelblock entspricht einem Bildbereich und kann mit einem entsprechenden Bildbereich eines anderen Einzelbilds verglichen werden. Eine Vorgabe kann beispielsweise auch in Form von Bildkoordinaten und/oder Pixelbereichen erfolgen. Zum Vergleich muss daher vorab keine Bildauswertung vorgenommen werden, entsprechende Verfahren können daher sehr schnell ablaufen.

Es kann auch vorteilhaft sein, die Einzelbilder einer Bildinhaltserkennung zu unterwerfen und auf dieser Grundlage die einander entsprechende Bildbereiche zu ermitteln. Beispielsweise kann bei der Untersuchung von dreidimensionalen Strukturen vor einem flachen Hintergrund, etwa eines digitalen Bauteils oder einer biologischen Struktur, eine Bildinhaltserkennung vorgenommen werden, mittels derer das digitale Bauteil oder die biologische Struktur als Bildbereich erkannt wird. Dies entspricht einer bekannten Bildsegmentierung. In für den jeweiligen Untersuchungszweck "uninteressanten" Bereichen, beispielsweise dem flachen Hintergrund, wird kein Vergleich vorgenommen, was weitere Bearbeitungszeit einspart. Selbstverständlich können auch entsprechend erkannte Bildinhalte wie oben erläutert in Form von Pixelblöcken untersucht werden.

Das Zusammenführen von zwei oder mehr Einzelbildern, die bei unterschiedlichen numerischen Aperturen bereitgestellt wurden, zu einem neuen digitalen Ergebnisbild mit optimierter lokaler Schärfe erfolgt damit durch elektronische Bildverarbeitung. Beispielsweise kann der Bildbereich der Einzelbilder insgesamt abgerastert werden und für jeweils kleine lokale Bereiche das bestaufgelöste Bildelement bestimmt und dessen Bildinformation in das Ergebnisbild übernommen werden.

Werden, wie oben angegeben, Pixelblöcke in Form eines Rasters definiert, kann deren jeweilige Größe, d.h. die Größe der einander entsprechenden Bildbereiche, von unterschiedlichen Faktoren abhängig gemacht werden, die sowohl das Bild selbst als auch die Leistungsparameter der verwendeten Bildaufnahmeeinrichtung, des Bussystems, des anzeigenden Monitors und/oder eines auswertenden Steuerrechners betreffen. Eine individuelle Vorauswahl durch einen Benutzer und/oder auf Grundlage einer zu erwartenden Auflösung kann jeweils möglich sein. Das Verfahren kann beispielsweise an die Anzeige auf einer digitalen Bildanzeigeeinheit angepasst werden, wobei die Größe der jeweiligen Bildbereiche so gewählt wird, dass die anzeigbare Auflösung der Bildanzeigeeinheit nicht überschritten und damit unnötige Rechenleistung verbraucht wird. Entsprechende Limitationen können jedoch auch bereits bei der Aufnahme der digitalen Einzelbilder und deren Auflösung berücksichtigt werden.

Die Anpassung der entsprechenden Rasterweite richtet sich im Wesentlichen nach der Objekttextur und dessen Topografie: Bei starken Topografien und Kanten kann eine kleinere Rasterweite und bei schwachen Texturen oder Bildrauschen eine größere Rasterweite verwendet werden. Auch dies ist von der erläuterten Verwendung einer Bildinhaltserkennung umfasst, die zum Ermitteln der einander entsprechenden Bildbereiche der digitalen Einzelbilder einbezogen wird. Eine derartige Rasterweite kann daher auch uneinheitlich über das Bildfeld der digitalen Einzelbilder (jedoch in allen digitalen Einzelbildern identisch) angewandt werden. Bei dem Zusammensetzen der Bildbereiche der Einzelbilder können jeweils die Ränder der erhaltenen Rasterkanten durch Interpolation angepasst werden, so dass ein homogener Übergang entsteht.

Die Erfindung ermöglicht insbesondere, in dem erhaltenen Ergebnisbild eine gravierende Schärfensteigerung zu erzielen, ohne dabei, wie bei anderen digitalen Nachbearbeitungen, Annahmen über das Objekt treffen zu müssen und hierdurch der Gefahr von Artefakten zu unterliegen (z.B. bei einer bekannten Kantenschärfung). Da das erhaltene Bild lediglich aus einer Synthese generischer Aufnahmen (möglicherweise sogar aus demselben Kanal) besteht, ist den mittels des erfindungsgemäßen Verfahrens erhaltenen Ergebnisbildern ein uneingeschränkter "Wahrheitsgehalt" mit allenfalls minimalen Artefakten zuzusprechen.

Das Ermitteln des Schärfewerts bzw. einer die Bildschärfe kennzeichnenden Größe kann beispielsweise umfassen, mittels eines kontrastbasierten Verfahrens jeweils einen Schärfe- oder Auflösungswert zu bestimmen. Sind Informationen über Bildinhalte verfügbar, kann auch nur ein Teil des Bilds, der von Interesse ist, einem entsprechenden Verfahren unterworfen werden.

Besonders vorteilhaft kann sein, bei der Aufnahme der wenigstens zwei Einzelbilder zusätzlich eine Fokuseinstellung eines Hauptobjektivs des Mikroskopsystems zu verändern. Das erfindungsgemäße Verfahren eignet sich also auch in Kombination mit einem herkömmlichen z-Stacking-Verfahren. Hierbei kann ein Bild pro z-Ebene aufgenommen werden, besonders vorteilhaft ist jedoch, das Verfahren jeweils in unterschiedlichen z-Ebenen durchzuführen, so dass jeweils schärfeoptimierte Ergebnisbilder bei den unterschiedlichen z-Ebenen erhalten werden. Diese können ihrerseits zu einem weiteren schärfeoptimierten Bild verrechnet werden. Hierdurch ergibt sich eine nochmalige Verbesserung gegenüber bekannten z-Stacking-Verfahren, weil die jeweils maximal erzielbare Auflösung (bei geöffneter Aperturblende) erhalten bleibt.

Die Mittel zur Bereitstellung der mikroskopischen Bilder bei unterschiedlichen numerischen Aperturen können beispielsweise als getrennte Stereokanäle in Stereomikroskopen ausgebildet sein. Hierbei können in den beiden Stereokanälen jeweils mittels eines Erfassungsmoduls der Bilderfassungseinheit mehrere digitale Einzelbilder des Objekts bei den unterschiedlichen numerischen Aperturen aufgenommen werden, indem jeweils eine variable Aperturblende verstellt wird. Für jeden Stereokanal werden damit entsprechend verbesserte Teilbilder erhalten. Mit anderen Worten kann aus den Einzelbildern -jedoch für die beiden Stereokanäle getrennt - jeweils ein digitales Ergebnisbild erstellt werden. Dies ermöglicht es, auch stereoskopische Bilder, die sich beispielsweise zur Betrachtung mittels einer stereoskopischen Betrachtungseinheit eignen, entsprechend zu verbessern.

Es kann jedoch auch vorgesehen sein, ein eingangs erläutertes "asymmetrisches" Stereomikroskop mit zwei Stereokanälen mit unterschiedlichen numerischen Aperturen zu verwenden. Jeweils ein Einzelbild eines Stereokanals kann hier mit einem Einzelbild des jeweils anderen Stereokanals kombiniert werden. Die Erfassung der Bilder in den Stereokanälen kann dabei gleichzeitig erfolgen.

Damit können vollständig getrennte Abbildungssysteme als Mittel zur Bereitstellung mikroskopischer Bilder bei unterschiedlichen numerischen Aperturen verwendet werden, welche denselben Objektbereich (möglicherweise unter unterschiedlichen perspektivischen Winkeln) erfassen. Als typische Einsatzformen für derartige parallele Bildaufnahmen bieten sich dementsprechend Mikroskopsysteme vom Teleskop- oder Greenough-Typ (also Stereomikroskope) an.

Bei einem erfindungsgemäßen Verfahren können also die wenigstens zwei bei den unterschiedlichen numerischen Aperturen bereitgestellten mikroskopischen Einzelbilder gleichzeitig in Form der zwei digitalen Einzelbilder aufgenommen werden, wobei wenigstens zwei Aufnahmekanäle verwendet werden. Hierbei kann jedem der beiden Kanäle ein Bilderfassungsmodul der Bilderfassungseinheit, beispielsweise ein Chip in jeweils einem Chipgehäuse, zugeordnet sein. Anstelle der Verwendung zweier vollständig getrennter Abbildungssysteme kann ein Abbildungsstrahlengang jedoch auch in mehrere Kanäle geteilt werden, welche auf unterschiedliche Bilderfassungsmodule geführt werden.

Bei einer gleichzeitigen Bildaufnahme können insbesondere auch bewegte Objekte mit hoher Dynamik aufgenommen werden, das Verfahren ist jedoch apparativ aufwendiger als ein sequentielles Verfahren, bei dem die wenigstens zwei bei den unterschiedlichen numerischen Aperturen bereitgestellten Einzelbilder nacheinander aufgenommen werden. Bei einer sequentiellen Aufnahme wird vorteilhafterweise eine Blendenöffnung zwischen den wenigstens zwei Aufnahmen verstellt. Dies kann vollständig automatisch erfolgen, beispielsweise mittels Steuersignalen einer entsprechenden Steuereinheit, beispielsweise eines Steuerrechners.

Die verwendbare Aperturblende kann beispielsweise als Irisblende oder als elektronisch steuerbares LCD-Transmissionselement ausgebildet sein.

Eine Bilderfassungseinheit für ein Mikroskopsystem mit Mitteln zur Bereitstellung mikroskopischer Bilder bei unterschiedlichen numerischen Aperturen, die zur Durchführung eines Verfahrens nach einem der vorstehenden Ansprüche eingerichtet ist, ist ebenfalls Gegenstand der vorliegenden Erfindung. Zu den Merkmalen und Vorteilen der erfindungsgemäßen Bilderfassungseinheit sei auf die zuvor erläuterten Aspekte verwiesen.

Auch ein Mikroskopsystem mit Mitteln zur Bereitstellung mikroskopischer Bilder bei unterschiedlichen numerischen Aperturen sowie einer entsprechenden Bilderfassungseinheit profitiert von den zuvor erläuterten Merkmalen.

Vorteilhafterweise ist in einem derartigen Mikroskopsystem eine Steuereinrichtung vorgesehen, mittels derer die Bilderfassungseinheit derart ansteuerbar ist, dass diese wenigstens zwei digitale Einzelbilder, die bei jeweils unterschiedlichen numerischen Aperturen bereitgestellt werden, aufnimmt. Beispielsweise kann eine derartige Steuereinrichtung auch zur Verstellung einer verstellbaren Aperturblende eingerichtet sein.

Vorteilhafterweise ist mittels der Steuereinrichtung jeweils eine Anzahl aufzunehmender digitaler Einzelbilder und, falls vorgesehen, wenigstens ein Verstellbetrag für die Aperturblende vorgebbar. Ferner ist die Steuereinrichtung dazu eingerichtet, die Bildaufnahmeeinheit derart anzusteuern, dass alternierend eine Aufnahme der digitalen Einzelbilder und eine Verstellung der Aperturblende um den Verstellbetrag durchführbar ist. Eine entsprechende Steuereinheit kann auch dazu ausgebildet sein, die Belichtungszeit oder den Gain (Verstärkungsfaktor) der digitalen Bilderfassungseinheit der jeweils gewählten Aperturveränderung anzupassen, so dass eine gleiche Helligkeit des aufgenommen Bildes bei den unterschiedlichen numerischen Aperturen gewährleistet ist.

Insbesondere ist das erfindungsgemäße Mikroskopsystem, wie erwähnt, als Stereomikroskop mit wenigstens zwei Stereokanälen ausgebildet, wobei jedem der Stereokanäle ein Erfassungsmodul der Bilderfassungseinheit zugeordnet ist.

Die Erfindung ist anhand von Ausführungsbeispielen in der Zeichnung gegenüber dem Stand der Technik veranschaulicht und wird unter Bezugnahme auf die Zeichnung ausführlich beschrieben.

### Figurenbeschreibung

Figur 1 zeigt eine Prinzipskizze der Strahlengänge der Stereokanäle eines Stereomikroskops, bei dem eine Bilderfassung gemäß einer Ausführungsform der Erfindung vorgenommen werden kann.
Figur 2 zeigt eine Prinzipskizze eines Strahlengangs eines optischen Kanals eines Mikroskops, bei dem eine Bilderfassung gemäß einer Ausführungsform der Erfindung vorgenommen werden kann.
Figur 3 zeigt einen Zusammenhang zwischen Auflösung, numerischer Apertur und Schärfentiefe in Form eines Diagramms.
Figur 4 zeigt ein Verfahren gemäß einer Ausführungsform der Erfindung in Form eines schematischen Ablaufplans.
Figur 5 zeigt schematisch ein Stereomikroskop, bei dem eine Bilderfassung gemäß einer Ausführungsform der Erfindung vorgenommen werden kann.

In den Figuren tragen einander entsprechende Elemente identische Bezugszeichen und werden der Übersichtlichkeit halber nicht wiederholt erläutert.

### Ausführungsformen der Erfindung

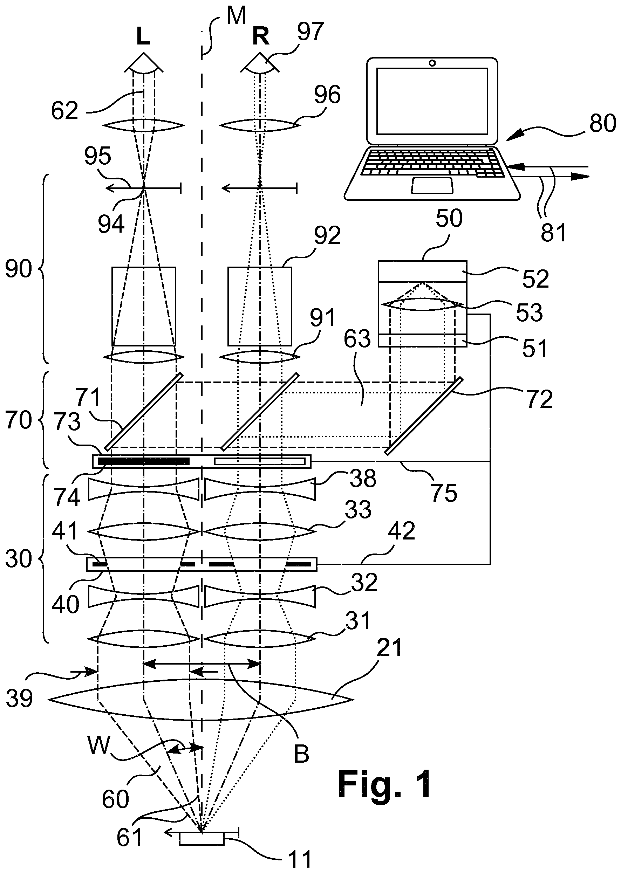

Die Bilderfassung gemäß einer Ausführungsform der vorliegenden Erfindung kann beispielsweise über einen oder beide Stereokanäle eines Stereomikroskops vom Teleskoptyp erfolgen. Die Komponenten eines derartigen Stereomikroskops mit den gemäß einer Ausführungsform der Erfindung zusätzlich vorgesehenen Elementen sind in Figur 1 schematisch dargestellt.

Entsprechende Stereomikroskope weisen beispielsweise ein gemeinsames Hauptobjektiv 21 auf, dem zwei identisch ausgebildete stereoskopische Kanäle L und R nachgeschaltet sind. In einer Schärfenebene des Hauptobjektivs ist ein zu betrachtendes Objekt 11 angeordnet. Das in Figur 1 dargestellte Stereomikroskop ist symmetrisch aufgebaut, was bedeutet, dass das Stereomikroskop zwei Stereokanäle L, R aufweist, die einander baulich entsprechen. Daher werden in der Figur 1 wahlweise die Elemente des linken Stereokanals L bzw. die Elemente des rechten Stereokanals R erläutert. Die Erläuterungen betreffen dabei jedoch beide Stereokanäle L, R in gleicher Weise.

Die Erfindung ist jedoch auch mit besonderem Vorteil bei Stereomikroskopen einsetzbar, bei denen eines oder mehrere Elemente der beiden Stereokanäle L und R unterschiedlich zueinander ausgebildet sind, wie beispielsweise in der DE 10 2005 040 473 B4 beschrieben. Die Erfindung kann auch in Stereomikroskopen vom Greenough-Typ zum Einsatz kommen.

Ein entsprechendes Stereomikroskop kann daher als Mittel zur Bereitstellung mikroskopischer Bilder bei unterschiedlichen numerischen Aperturen zwei identisch ausgebildete Stereokanäle L und R mit einer individuell oder gemeinsam verstellbaren Aperturblende (s.u.) oder zwei zumindest hinsichtlich der numerischen Apertur unterschiedlich ausgebildete Stereokanäle L und R umfassen.

Die Strahlengänge der Stereokanäle L, R sind in der Figur 1 jeweils durch eine schematische Darstellung der Randstrahlen 61 entsprechender Lichtbündel 60 veranschaulicht. Die Randstrahlen 61 des linken Stereokanals L sind gestrichelt, jene des rechten Stereokanals R punktiert dargestellt. Die optischen Achsen sind jeweils strichpunktiert dargestellt und mit 62 bezeichnet. Eine gemeinsame Mittelachse ist mit M bezeichnet.

Dem Hauptobjektiv 21 ist ein Zoomsystem 30 mit jeweils vier optischen Gruppen 31 bis 33 und 38 in beiden Stereokanälen L, R nachgeschaltet. Das Hauptobjektiv 21 und die jeweils vier optischen Gruppen 31 bis 33 und 38 sind stark schematisiert dargestellt und können in der Praxis insbesondere jeweils mehrere optische Linsen umfassen. Die vier optischen Gruppen 31 bis 33 und 38 der beiden Stereokanäle L, R können jeweils mechanisch miteinander gekoppelt sein und, falls beweglich (siehe unten) mit gemeinsamen Stellmitteln verstellt werden. Zoomsysteme 30, wie sie im Rahmen der vorliegenden Erfindung zum Einsatz kommen können, sind beispielsweise in der US 6 816 321 A beschrieben.

Die jeweils erste optische Gruppe 31 des Zoomsystems 30 wirkt sammelnd und fokussiert damit den zwischen dem Hauptobjektiv 21 und der jeweils ersten optischen Gruppe 31 des Zoomsystems 30 afokal verlaufenden Strahlengang. In Stereomikroskopen ist häufig ein derartiger afokaler Strahlengang zwischen dem Hauptobjektiv 21 und den bildseitig hiervon vorgesehenen Komponenten realisiert, so dass sich eine besonders gute Adaptionsmöglichkeit für zusätzliche Komponenten ergibt. Die Erfindung eignet sich jedoch, wie erläutert, auch für Mikroskope ohne afokalen Strahlengang.

Zumindest eine der optischen Gruppen 31 bis 33 ist jeweils zur Verstellung des Vergrößerungsfaktors axial beweglich ausgebildet. Mit "axial" ist im Rahmen dieser Anmeldung eine Richtung gemeint, die jeweils vom Brennpunkt des Hauptobjektivs 21 ausgehend senkrecht durch das Hauptobjektiv 21 verläuft. Die Axialrichtung wird damit durch das Hauptobjektiv 21 definiert. Sie entspricht in dem in Figur 1 dargestellten Beispiel jener der optischen Achse 62 der Strahlengänge der Stereokanäle L, R bildseitig des Hauptobjektivs 21. Im dargestellten Beispiel kann beispielsweise jeweils die erste optische Gruppe 31 des Zoomsystems 30 fest, d.h. nicht axial beweglich ausgebildet sein.

Bildseitig der ersten optischen Gruppe 31 des Zoomsystems 30 ist jeweils eine zweite optische Gruppe 32 vorgesehen, die zerstreuende Eigenschaften aufweist. Mittels der zweiten optischen Gruppe 32 des Zoomsystems 30 wird jeweils der durch die erste optische Gruppe 31 fokussierte und damit konvergent verlaufende Strahlengang aufgeweitet. Die zweite optische Gruppe 32 ist beispielsweise jeweils entlang der optischen Achse 62 (also in axialer Richtung) beweglich ausgebildet.

Weiter bildseitig ist jeweils eine dritte optische Gruppe 33 vorgesehen. Diese wirkt erneut sammelnd und fokussiert den mittels der zweiten optischen Gruppe 32 des Zoomsystems 30 zerstreuten Strahlengang erneut. Auch die dritte optische Gruppe 33 des Zoomsystems 30 kann jeweils entlang der optischen Achse 62 (also in axialer Richtung) beweglich ausgebildet sein.

Das Zoomsystem 30 weist im dargestellten Beispiel jeweils Linsen 38 bzw. entsprechende optische Gruppen aus mehreren Linsen als vierte optische Gruppe auf, die den durch die dritte optische Gruppe 33 des Zoomsystems 30 fokussierten und damit konvergent verlaufenden Strahlengang jeweils insoweit aufweiten, dass auch bildseitig der Zoomsysteme 30 ein afokaler Strahlengang vorliegt.

Zwischen der zweiten optischen Gruppe 32 und der dritten optischen Gruppe 33 des Zoomsystems 30 ist jeweils eine verstellbare Aperturblende 41 vorgesehen. Die Aperturblenden 41 in den Stereokanälen L, R können in einer insbesondere ansteuerbar ausgebildeten Blendeneinheit 40 angeordnet sein, die einen oder mehrere mechanische und/oder elektronische Eingänge 42 aufweist, über die ein Blendensignal empfangen werden kann. Das Blendensignal kann zur Einstellung eines Blendendurchmessers der verstellbaren Aperturblenden 41 verwendet werden. Ein entsprechendes Signal 41 kann insbesondere von einer Bilderfassungseinheit 50, die unten im Detail erläutert wird, oder von einem Steuerrechner 80, der die Bilderfassungseinheit 50 und/oder das gesamte Mikroskopsystem über Kommunikationskanäle 81 ansteuert, ausgegeben werden.

Wie erwähnt, können die Blendenöffnungen in beiden Stereokanälen L, R jedoch auch festgelegt sein und einen unterschiedlichen Durchmesser aufweisen.

Im dargestellten Beispiel sind die Aperturblenden 41 des linken L und rechten R Stereokanals unterschiedlich eingestellt, so dass ein Betrachter, der mit seinen Augen 97 durch Okulare 96 (siehe unten) in das dargestellte Stereomikroskop blickt, aufgrund des eingangs erläuterten physiologischen Phänomens ein Bild mit verbesserter Auflösung und Schärfentiefe wahrnehmen kann.

Bildseitig des Zoomsystems 30 ist eine Auskoppeleinheit 70 dargestellt, die einen vorzugsweise einstellbaren Anteil 63 des Lichts der beiden Stereokanäle L, R an eine Bilderfassungseinheit 50 auskoppelt. Es sei betont, dass eine entsprechende Auskoppeleinheit nicht in der dargestellten Position angeordnet sein muss. Eine Auskoppeleinheit 70 kann beispielsweise auch in einen Tubus 90 (siehe unten) integriert sein. Statt des für die Bilderfassungseinheit 50 bestimmten ausgekoppelten Anteils 63 des Lichts der beiden Stereokanäle L, R kann auch das zur Darbietung an einen Betrachter bestimmte Licht aus der Axialrichtung, also gegenüber den optischen Achsen 62, ausgekoppelt werden. In letzterem Fall kann der für die Bilderfassungseinheit 50 bestimmte Anteil 63 weiter in Axialrichtung verlaufen. In allen Fällen kann jeweils auch eine beliebige Umlenkung erfolgen. Ein ausschließlich zur digitalen Bilderfassung eingerichtetes Mikroskop kann auch ohne eine Auskoppeleinheit 70 ausgebildet sein, so dass das Licht der beiden Stereokanäle L, R vollständig der Bilderfassungseinheit 50 zur Verfügung gestellt werden kann.

Im dargestellten Beispiel wird der für die Bilderfassungseinheit 50 bestimmte ausgekoppelte Anteil 63 des Lichts der beiden Stereokanäle L, R in einem Winkel von 90° gegenüber den optischen Achsen 62 ausgekoppelt. Hierzu können beispielsweise in beiden Stereokanälen L, R teildurchlässige Spiegel oder Prismen 71 vorgesehen sein. Wahlweise kann auch nur Licht eines Stereokanals L, R mittels eines teildurchlässigen Spiegels 71 oder Prismas ausgekoppelt werden. Der ausgekoppelte Anteil 63 der zwei Stereokanäle L, R kann in getrennten Kanälen ausgekoppelt werden (nicht dargestellt), so dass eine Bilderfassungseinheit 50, beispielsweise mittels zweier Bilderfassungsmodule 52 (siehe unten, z.B. CCD-Chips) jeweils ein stereoskopisches Teilbild erhalten kann. Hierbei können auch zwei Bilderfassungseinheiten 50 verwendet werden.

Der ausgekoppelte Anteil 63 des Lichts der beiden Stereokanäle L, R kann auch in einen gemeinsamen Strahlengang überführt werden, wobei beispielsweise jeweils das Licht eines der stereoskopischen Kanäle L, R bei der Bilderfassung mittels der Bilderfassungseinheit 50 ausgeblendet werden kann. Hierzu kann beispielsweise eine optische Einheit 73 vorgesehen sein, die beispielsweise alternierend betätigbare Shutter 74 aufweist. Die Bilderfassungseinheit 50 kann hierdurch alternierend beide Stereokanäle L, R erfassen. Alternativ oder zusätzlich zu Shuttern 74 können auch beispielsweise unterschiedlich ausgerichtete Polarisationsfilter in der optischen Einheit 73 vorgesehen sein, die eine nachfolgende selektive Erfassung von Licht der beiden stereoskopischen Kanäle L, R mittels der Bilderfassungseinheit 50 ermöglichen, jedoch eine visuelle Betrachtung nicht stören. Hierzu kann diese beispielsweise mit einem variabel einstellbaren Polarisationsfilter 51 versehen sein. Auch die optische Einheit 73 ist zweckmäßigerweise durch die Bilderfassungseinheit 50 und/oder den Steuerrechner 80 über einen oder mehrere mechanische und/oder elektronische Eingänge 75 ansteuerbar.

Es sei betont, dass die Darstellung hier stark schematisiert ist. Würde die dargestellte Anordnung direkt umgesetzt, ergäbe sich ggf. ein Problem im Stereobetrieb, d.h. wenn beide Shutter 74 geöffnet sind. Der rechte teildurchlässige Spiegel oder das entsprechende Prisma 71 würde dann das Licht des linken Kanals L zwangsweise auch (wenn auch nicht erwünscht) im rechten Kanal R teilweise nach oben lenken, wodurch der Stereoeinblick gestört würde. Für einen solchen Fall würden die teildurchlässigen Spiegel oder Prismen 71 derart ausgerichtet werden, dass diese das Licht aus der Papierebene hinaus spiegeln (d.h. keine Durchdringung der Stereokanäle erfolgt). Die ausgekoppelten Kanäle können dann außerhalb der Papierebene mittels eines weiteren Strahlteilers überlagert und in die digitale Bilderfassungseinheit eingekoppelt werden.

Über einen Umlenkspiegel 72 oder ein entsprechendes Prisma wird der ausgekoppelte Anteil 63 des Lichts eines oder beider Stereokanäle L, R in die mehrfach erwähnte Bilderfassungseinheit 50 eingestrahlt, ggf. mittels des Polarisationsfilters 51 gefiltert, und durch eine entsprechende optische Gruppe 53 auf ein Bilderfassungsmodul 52 fokussiert. Wie erwähnt können auch zwei oder mehrere Bilderfassungsmodule 52 vorgesehen sein. Sind in der optischen Einheit 73 beispielsweise Polarisationsfilter 74 vorgesehen, kann jedes der zwei oder mehreren Bilderfassungsmodule 52 ein komplementäres Filter aufweisen, so dass jeweils nur selektiv Licht eines Stereokanals erfasst wird. Bei entsprechender Ausrichtung der Bilderfassungseinheit 50 kann auch auf den Umlenkspiegel 72 oder ein entsprechendes Prisma verzichtet werden.

Der Auskoppeleinheit 70 ist eine Einblickeinheit nachgeordnet, die beispielsweise einen Tubus 90 umfasst. Das Zoomsystem 30, die Auskoppeleinheit 70 und die Einblickeinheit können zum Teil in einem Gehäuse angeordnet sein, an das das Hauptobjektiv 21 bzw. eine entsprechende Objektivhalterung angeschraubt und/oder beispielsweise mittels einer Schwalbenschwanzaufnahme angebracht sein kann. Die Einblickeinheit, insbesondere der Tubus 90, kann ebenfalls mit einer entsprechenden Aufnahme an einem entsprechenden Gehäuse angebracht werden. Auch die Auskoppeleinheit 70 kann modular ausgebildet sein.

Der Tubus 90 umfasst jeweils Tubuslinsen 91, welche Zwischenbilder 95 erzeugen. Den Tubuslinsen 91 nachgeordnet sind jeweils Umkehrsysteme 92 zur Bildaufrichtung. Bildseitig schließen sich jeweils Okulare 96 an. Die Tubuslinsen 91 sind dazu ausgebildet, jeweils parallele Lichtbündel auf einem Punkt 94 in der Ebene der Zwischenbilder 95 zu fokussieren. Der Punkt 94 befindet sich im vorderen Brennpunkt der Okulare 96 und wird nach unendlich abgebildet, so dass er mit den Augen 97 eines Betrachters betrachtet werden kann.

Ein entsprechendes Stereomikroskop kann für eine rein digitaloptische Erfassung eines Objekts 11 ausgebildet sein, wobei die erwähnte Erfassungseinheit 50 auch bildseitig des Tubus 90 angeordnet sein kann. Die Umkehrsysteme 92 zur Bildaufrichtung sind bei der digitaloptischen Erfassung nicht erforderlich.

Optional können in bekannter Weise weitere Baugruppen in den Strahlengang eingebracht sein, beispielsweise Vorsatzlinsen, Filter, Polarisatoren, Auflichtbeleuchtungseinheiten und/oder Strahlteilersysteme.

Die stereoskopischen Kanäle L und R sind hier parallel zu der Mittelachse M angeordnet. Der Abstand B zwischen den optischen Achsen der stereoskopischen Kanäle L und R wird als Stereobasis bezeichnet. Die Stereobasis B definiert den Winkel W, unter dem jeder stereoskopische Kanal auf das Objekt blickt. Ein Durchmesser eines Strahlenbündels ist mit 39 bezeichnet. Er richtet sich jeweils nach der Stellung der Aperturblenden 41.

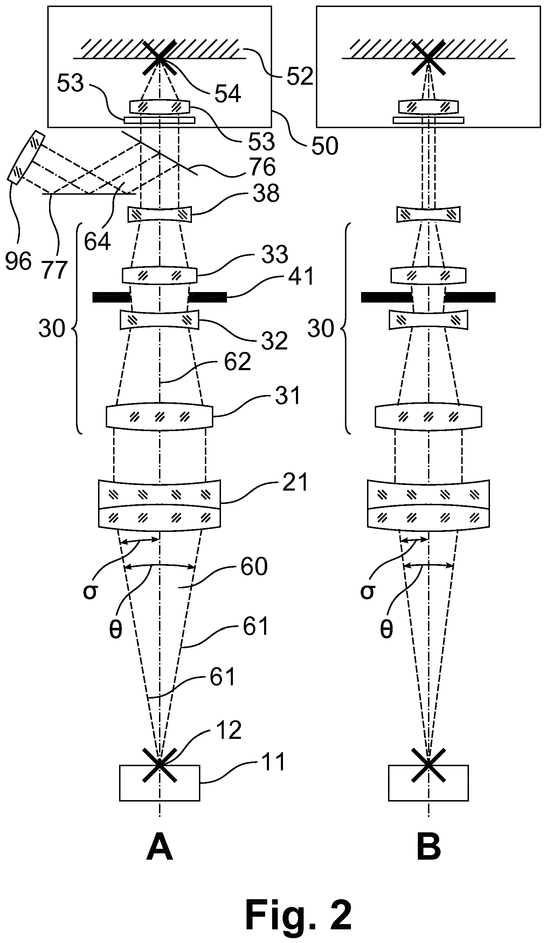

Die Erfindung ist weder auf Stereomikroskope mit unterschiedlich ausgebildeten oder mittels Aperturblenden 41 auf unterschiedliche numerische Aperturen eingestellten Stereokanälen L, R, noch generell auf Stereomikroskope beschränkt. Die Erfindung kann insbesondere auch in einkanaligen Mikroskopen zum Einsatz kommen, wie unter Bezugnahme auf Figur 2 veranschaulicht wird. Ein "einkanaliges" Mikroskop weist einen einzelnen Strahlengang durch das zentrale Objektiv 21 und, falls vorhanden, ein Zoomsystem 30 mit nur in Einzahl vorhandenen optischen Einheiten 31 bis 33 bzw. 38 auf. Einkanalige Mikroskope sind beispielweise Makroskope und Weitfeld-Mikroskope (epi-Mikroskope), die ebenfalls von der Erfindung profitieren können. Der Begriff "einkanalig" schließt binokulare oder mehrkanalige Tuben bzw. Einblicke selbstverständlich nicht aus.

Figur 2 zeigt schematisch einen Strahlengang eines optischen Kanals eines Mikroskops, das erfindungsgemäß ausgebildet sein und/oder betrieben werden kann, in zwei Blendenstellungen A und B. Bei dem optischen Kanal kann es sich beispielsweise um einen der optischen Kanäle eines Stereomikroskops oder den Strahlengang eines oben angegebenen einkanaligen Mikroskops, beispielsweise eines Makroskops, handeln. Ein entsprechender Strahlengang ist in einem Stereomikroskop (vgl. Figur 1) zumindest zum Teil paarweise vorgesehen.

Die optischen Randstrahlen schließen aufgrund der Apertureinstellung mittels der Aperturblende 41 in den mit A und B bezeichneten Blendenstellungen unterschiedliche Winkel θ ein. Der Winkel θ/2 entspricht dem Aperturwinkel σ zwischen jeweils einem der Randstrahlen und der optischen Achse 62.

Der Strahlengang umfasst das Hauptobjektiv 21 (im klassischen Mikroskop oder Makroskop in der Regel nur als "Objektiv" bezeichnet), wie zuvor erläutert. In einer Objektebene 12 des Hauptobjektivs 21, die dessen vorderer Brennebene entspricht, ist ein zu betrachtendes Objekt 11 angeordnet. Ein betrachteter Punkt ist mit einem Kreuz X bezeichnet. Dem Hauptobjektiv 21 ist ein Zoomsystem 30 mit drei optischen Gruppen 31 bis 33 nachgeschaltet, wie ebenfalls erläutert.

Zwischen der Linse bzw. optischen Gruppe 38 und einer optischen Gruppe 53 der Bilderfassungseinheit 50 verläuft der Strahlengang auch hier afokal, es erfolgt jedoch keine Auskopplung des Anteils des Lichts, der für die Bilderfassungseinheit 50 bestimmt ist. Stattdessen kann, wie nur in Ansicht A veranschaulicht, eine entsprechende Auskopplung eines Anteils 64 zur visuellen Betrachtung mittels des Okulars 96 erfolgen. Hierzu sind beispielsweise Spiegel- bzw. Prismenflächen 76, 77 vorgesehen. Die Darstellung ist stark vereinfacht, insbesondere ist auf eine Darstellung einer Bildaufrichtungseinheit 92 verzichtet worden.

Die Blendenstellungen A und B entsprechen im vorliegenden Beispiel den Schritten eines erfindungsgemäßen Verfahrens. Zu einem ersten Zeitpunkt (entsprechend Blendenstellung A, d.h. bei einer höheren numerischen Apertur aber bei einer geringeren Schärfentiefe) erfolgt dabei eine erste digitale Bilderfassung mittels der Bilderfassungseinheit 50, zu einem zweiten Zeitpunkt (entsprechend Blendenstellung B, d.h. bei einer geringeren numerischen Apertur aber bei höherer Schärfentiefe) eine zweite.

In Figur 3 ist ein Zusammenhang zwischen Auflösung, numerischer Apertur und Schärfentiefe in Form eines Diagramms 300 veranschaulicht. In dem Diagramm 300 ist eine Distanz z zur Schärfenebene eines Objektivs, z.B. des Hauptobjektivs 21, in mm auf der Abszisse und eine Auflösung R in Linienpaaren pro Millimeter auf der Ordinate dargestellt. Bei einem Wert z = 1 mm liegt ein Punkt 1 mm oberhalb, bei einem Wert von -1 mm 1 mm unterhalb der Schärfenebene.

Exemplarisch sind Auflösungskurven für numerische Aperturen nA von 0,1, 0,05 und 0,025 dargestellt, wie sie beispielsweise für Stereomikroskope typisch sind. Wie bereits eingangs erwähnt, erreicht die Auflösung bei hoher numerischer Apertur ein Maximum, hier von 300 Linienpaaren pro Millimeter bei einer numerischen Apertur nA von 0,1. Diese maximale Auflösung nimmt jedoch mit zunehmendem Abstand zur Ebene 0, der Schärfenebene, rapide ab. Bereits bei einem Abstand 0,1 mm beträgt die Auflösung nur mehr etwa ein Sechstel. Dies entspricht der eingangs erläuterten geringen Schärfentiefe bei hoher numerischer Apertur.

Die Schärfentiefe kann signifikant verbessert werden, wenn, beispielsweise mit einer einstellbaren Aperturblende 41, die numerische Apertur verringert wird. Die Aperturblende wird hierzu entsprechend geschlossen. Wie ersichtlich, ergibt sich beispielsweise bei einer numerischen Apertur von 0,05 nurmehr die halbe maximale Auflösung gegenüber der numerischen Apertur von 0,1, diese ist jedoch auch bei einem Wert z von 0,1 mm, d.h. außerhalb der Schärfenebene, noch besser als bei einer numerischen Apertur von 0,1. In verstärktem Maße gilt dies bei einer weiteren Verringerung der numerischen Apertur auf beispielsweise 0,025.

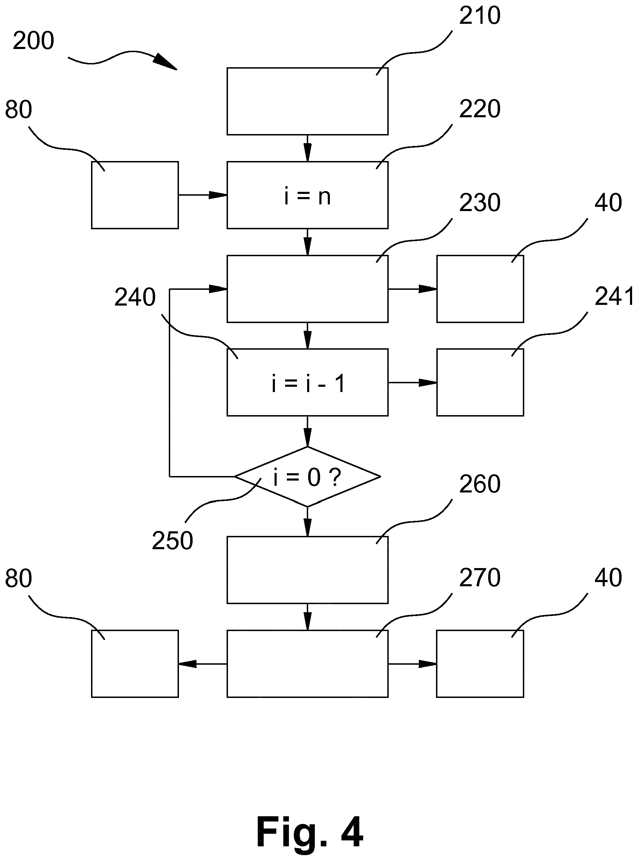

Mit der vorliegenden Erfindung wird daher eine Bilderfassung angestrebt, bei der idealerweise die Auflösung einer Einhüllenden der gezeigten Auflösungskurven entspricht. Dies kann beispielsweise mittels des in Figur 4 veranschaulichten Verfahrens 200 erreicht werden. In Figur 4 ist ein Verfahren gemäß einer Ausführungsform der Erfindung in Form eines Ablaufplans schematisch dargestellt.

Das Verfahren beginnt mit einem Verfahrensschritt 210. Beispielsweise geht ein für ein entsprechendes Verfahren eingerichtetes Mikroskopsystem in einem Schritt 210 in einen Bilderfassungsmodus über. In einem Schritt 220 wird, beispielsweise mittels eines Steuerrechners 80 und/oder mittels einer in der Bilderfassungseinheit 50 integrierten Recheneinheit oder dergleichen, eine Anzahl zu erfassender Bilder vorgegeben. Die Anzahl wird hier mit n bezeichnet und in einen Zähler i zwischengespeichert. Die Anzahl n kann beispielsweise auf Grundlage der eingestellten Vergrößerung und/oder von Mikroskopparametern vorgegeben werden. Gleichzeitig wird in dem Schritt 220 auch eine Vorgabe für eine Blendenverstellung (in Form eines Verstellschritts) und/oder bezüglich einer Belichtungszeit und/oder eines Verstärkungsfaktors vorgegeben. Auch diese Vorgabe kann auf Grundlage von momentan eingestellten Mikroskopparametern wie einer Vergrößerung und dergleichen erfolgen.

In einem Schritt 230 erfolgt durch Ausgabe eines entsprechenden Signals an eine Blendeneinheit 40 eine Verstellung der Aperturblende entsprechend dem vorgegebenen Verstellschritt. Das Verfahren betrifft in der dargestellten Ausführungsform also ein Mikroskopsystem mit einer entsprechenden ansteuerbaren Blende. In einem nachfolgenden Schritt 240 wird der Zähler i um eins dekrementiert. Gleichzeitig erfolgt eine Aufnahme mittels der Bilderfassungseinheit, die in einem Zwischenspeicher 241 zwischengespeichert wird. Wie bereits zuvor erläutert, können hierbei auch Aufnahmen beispielsweise zweier stereoskopischer Kanäle eines Stereomikroskops vorgenommen werden, was auch insbesondere nacheinander erfolgen kann. Beispielsweise kann zunächst ein stereoskopischer Kanal ausgeblendet werden und eine Aufnahme erfolgen. Anschließend erfolgt die Auswahl eines anderen stereoskopischen Kanals und eine entsprechende Aufnahme. Entsprechende Stereobildpaare können ebenfalls in dem Zwischenspeicher 241 zwischengespeichert werden. Ist die vorgegebene Anzahl an Aufnahmen noch nicht erreicht, was durch einen Vergleich in Schritt 250 ermittelt wird, erfolgt erneut in Schritt 230 eine Blendenverstellung in der erläuterten Weise und anschließend eine Aufnahme mit Dekrementierung des Zählers i.

Nachdem die vorgegebene Anzahl an Aufnahmen erfolgt ist, werden diese in einem Schritt 260, der auch in einem externen Steuerrechner 80 vorgenommen werden kann, miteinander verrechnet. Ein Verfahrenszyklus ist in einem Schritt 270 beendet, indem, sofern noch nicht erfolgt, entsprechend verrechnete Bilder an einen externen Steuerrechner 80 oder auch eine externe Bildwiedergabeeinheit ausgegeben werden können. Gleichzeitig erfolgt eine Verstellung der Blendeneinheit 40 in ihren Grundzustand. Das Verfahren kann erneut mit Schritt 210 beginnen.

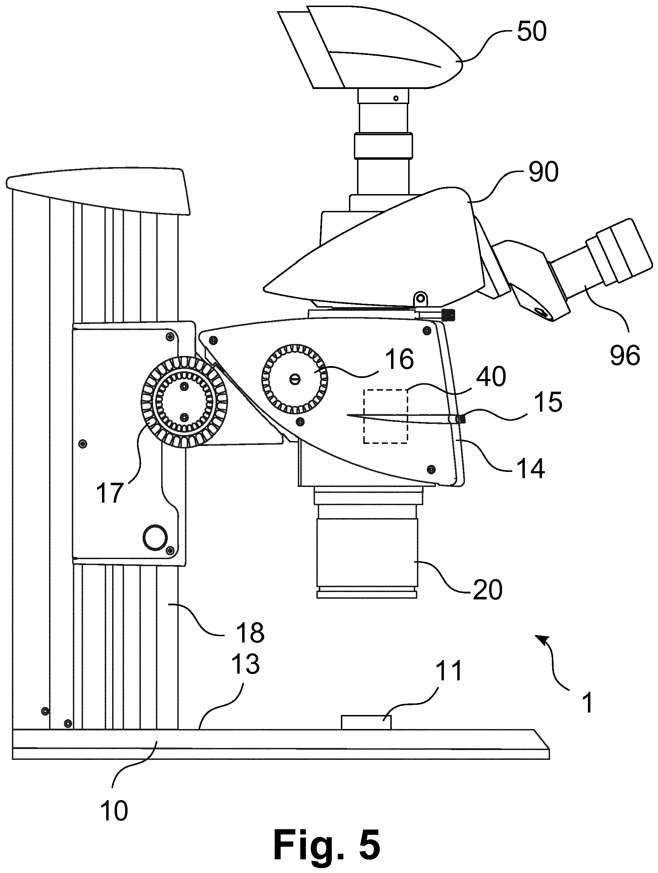

In Figur 5 ist die praktische Umsetzung der erfindungsgemäßen Maßnahmen in einem als Stereomikroskop ausgebildeten Mikroskopsystem veranschaulicht. Das Mikroskopsystem ist insgesamt mit 1 bezeichnet.

Das Mikroskopsystem 1 umfasst einen Objekttisch 10, auf dessen Oberfläche 13 ein Objekt 11 angeordnet ist. Eine Objektivhalterung 20 für das Hauptobjektiv 21 ist vorgesehen. Die Zoomsysteme 30 sind in einem Gehäuse 14 angeordnet, das über entsprechende Einstellmittel 15, beispielsweise zur Verstellung von Filtern und dergleichen, verfügen kann. Zur Zoomeinstellung der Zoomsysteme 30 ist eine Verstelleinheit 16 vorgesehen. Die Verstelleinheit 16 verstellt zumindest eine bewegliche optische Gruppe der Zoomsysteme 30. Zur Schärfeneinstellung ist eine Verstelleinheit 17 vorgesehen. Mittels der Verstelleinrichtung 17 ist das Stereomikroskop in seiner Höhe an einem Stativ 18 verstellbar. Dem Gehäuse 14 ist bildseitig der Tubus 90 nachgeordnet, in den Okulare 96 eingepasst sein können. Eine digitale Bilderfassungseinheit 50, beispielsweise eine CCD-Kamera, kann in einem Strahlengang angeordnet werden, der beispielsweise mit dem Tubus 90 ausgekoppelt werden kann.

Die Blendeneinheit 40 ist vollständig innerhalb des Gehäuses 70 angeordnet, was dessen äußere Abmessungen nicht verändert. Sie kann, wie erläutert, mittels Steuersignalen der digitalen Bilderfassungseinheit 50 angesteuert werden. Das Mikroskopsystem 1 ist zur Durchführung des zuvor erläuterten Verfahrens eingerichtet.

## Patentansprüche

1. Verfahren (200) zur Bereitstellung eines digitalen Ergebnisbilds unter Verwendung eines Mikroskopsystems (1), das Mittel (R, L, 41) zur Bereitstellung mikroskopischer Bilder bei unterschiedlichen numerischen Aperturen sowie eine digitale Bilderfassungseinheit (50) aufweist, **dadurch gekennzeichnet, dass** das Verfahren umfasst, mittels der digitalen Bilderfassungseinheit (50) zumindest zwei mikroskopische Bilder bei unterschiedlichen numerischen Aperturen in Form digitaler Einzelbilder zu erfassen und jeweils einander entsprechende Bildbereiche der digitalen Einzelbilder hinsichtlich ihrer Bildschärfe miteinander zu vergleichen, wobei jeweils die Bildbereiche der digitalen Einzelbilder mit der höchsten Bildschärfe zu dem digitalen Ergebnisbild zusammengesetzt werden.

2. Verfahren (200) nach Anspruch 1, bei dem das Vergleichen der unterschiedlichen Bildbereiche der digitalen Einzelbilder hinsichtlich ihrer Bildschärfe unter Verwendung zumindest eines die Bildschärfe kennzeichnenden Werts erfolgt.

3. Verfahren (200) nach Anspruch 1 oder 2, bei dem die einander entsprechenden Bildbereiche der digitalen Einzelbilder auf Grundlage einer vorgegebenen Lage in den zumindest zwei digitalen Einzelbildern festgelegt werden.

4. Verfahren (200) nach Anspruch 3, bei dem die vorgegebene Lage in Form von gleichen Bildkoordinaten und/oder gleichen Pixelbereichen in den zumindest zwei digitalen Einzelbildern definiert wird.

5. Verfahren (200) nach einem der vorstehenden Ansprüche, bei dem die einander entsprechenden Bildbereiche der digitalen Einzelbilder auf Grundlage einer Bildinhaltserkennung ermittelt werden.

6. Verfahren (200) nach einem der vorstehenden Ansprüche, das umfasst, zur Bereitstellung der zumindest zwei mikroskopischen Einzelbilder bei den unterschiedlichen numerischen Aperturen zumindest eine Aperturblende (41) in zumindest einem optischen Kanal (L, R) des Mikroskopsystems (1) zu verstellen.

7. Verfahren (200) nach einem der vorstehenden Ansprüche, das umfasst, die zumindest zwei mikroskopischen Einzelbilder bei den unterschiedlichen numerischen Aperturen gleichzeitig mittels zweier optischer Kanäle (L, R) mit jeweils fester numerischer Apertur bereitzustellen und zu erfassen.

8. Verfahren (200) nach einem der vorstehenden Ansprüche, das für zumindest zwei unterschiedliche Fokuseinstellungen eines Hauptobjektivs (21) des Mikroskopsystems (1) wiederholt wird, so dass für die zumindest zwei unterschiedlichen Fokuseinstellungen jeweils ein Ergebnisbild erhalten wird.

9. Mikroskopsystem (1), das Mittel (R, L, 41) zur Bereitstellung mikroskopischer Bilder bei unterschiedlichen numerischen Aperturen sowie eine digitale Bilderfassungseinheit (50) aufweist und zur Durchführung eines Verfahrens (200) nach einem der vorstehenden Ansprüche eingerichtet ist.

10. Mikroskopsystem (1) nach Anspruch 9, bei dem die Mittel (L, R, 41) zur Bereitstellung der mikroskopischen Bilder bei den unterschiedlichen numerischen Aperturen zumindest einen optischen Kanal (L, R) mit einer Aperturblende (41) mit einstellbarer Blendenöffnung umfassen.

11. Mikroskopsystem (1) nach Anspruch 9, bei dem die Mittel (L, R) zur Bereitstellung der mikroskopischen Bilder bei den unterschiedlichen numerischen Aperturen zwei optische Kanäle (L, R) mit unterschiedlichen und/oder einstellbaren numerischen Aperturen umfassen.

12. Mikroskopsystem (1) nach Anspruch 10, das eine Steuereinrichtung (80) aufweist, um die digitale Bilderfassungseinheit (50) derart anzusteuern, dass die digitale Bilderfassungseinheit (50) zumindest zwei digitale Einzelbilder bei unterschiedlichen Blendenöffnungen der Aperturblende (41) in dem zumindest einen optischen Kanal (L, R) erfasst.

13. Mikroskopsystem (1) nach Anspruch 12, wobei die Steuereinrichtung (80) dazu ausgebildet ist, jeweils eine Anzahl zu erfassender digitaler Einzelbilder und einen Verstellbetrag für die Aperturblende (41) in dem zumindest einen optischen Kanal (L, R) vorzugeben und alternierend eine Erfassung der digitalen Einzelbilder mittels der digitalen Bilderfassungseinrichtung (50) und eine Verstellung der Aperturblende (41) um den Verstellbetrag durchzuführen.

14. Mikroskopsystem (1) nach einem der Ansprüche 9 bis 14, das als Stereomikroskop mit zwei stereoskopischen Kanälen (L, R) ausgebildet ist, wobei jedem der stereoskopischen Kanäle jeweils ein Erfassungsmodul (52) der digitalen Bilderfassungseinheit (50) zugeordnet ist.

## Claims

1. Method (200) for providing a digital result image with the use of a microscope system (1), which comprises means (R, L, 41) for providing microscopic images using different numerical apertures and a digital image capturing unit (50), **characterized in that** the method includes capturing, in the form of digital individual images, at least two microscopic images by means of the digital image capturing unit (50) with different numerical apertures and in each case comparing image areas of the digital individual images corresponding to one another with each other with respect to their image definition, wherein in each case the image areas of the digital individual images with the highest image definition are assembled to make the digital result image.

2. Method (200) according to Claim 1, wherein the comparison of the different image areas of the digital individual images with respect to their image definitions takes place with the use of at least one value that characterizes the image definition.

3. Method (200) according to Claim 1 or 2, wherein the image areas of the digital individual images corresponding to one another are set on the basis of a specified position in the at least two digital individual images.

4. Method (200) according to Claim 3, wherein the specified position is defined in the form of the same image coordinates and/or same pixel areas in the at least two digital individual images.

5. Method (200) according to one of the preceding claims, wherein the images areas of the digital individual images corresponding to one another are determined on the basis of an image content recognition.

6. Method (200) according to one of the preceding claims, including adjusting at least one aperture stop (41) in at least one optical channel (L, R) of the microscope system (1) for provision of the at least two microscopic individual images with the different numerical apertures.

7. Method (200) according to one of the preceding claims, including the provision and capture of the at least two microscopic individual images with the different numerical apertures simultaneously by means of two optical channels (L, R) with in each case fixed numerical aperture.

8. Method (200) according to one of the preceding claims, which is repeated for at least two different focus settings of a main objective lens (21) of the microscope system (1), so that in each case a result image is obtained for the at least two different focus settings.

9. Microscope system (1), comprising means (R, L, 41) for providing microscopic images with different numerical apertures and a digital image capturing unit (50) and being arranged for implementation of a method (200) according to one of the preceding claims.

10. Microscope system (1) according to Claim 9, wherein the means (L, R, 41) for providing the microscopic images with the different numerical apertures comprise at least one optical channel (L, R) with an aperture stop (41) with adjustable aperture.

11. Microscope system (1) according to Claim 9, wherein the means (L, R) for providing the microscopic images with the different numerical apertures comprise two optical channels (L, R) with different and/or adjustable numerical apertures.

12. Microscope system (1) according to Claim 10, comprising a control device (80) to control the digital image capturing unit (50) in such a way that the digital image capturing unit (50) includes at least two digital individual images with different aperture of the aperture stop (41) in the at least one optical channel (L, R).

13. Microscope system (1) according to Claim 12, wherein the control device (80) is designed to specify in each case a number of digital individual images to be captured and an adjustment amount for the aperture stop (41) in the at least one optical channel (L, R), and alternately capture the digital individual images by means of the digital imaging device (50) and adjust the aperture stop (41) by the adjustment amount.

14. Microscope system (1) according to one of Claims 9 to 14, which is designed as a stereomicroscope with two stereoscopic channels (L, R), wherein each of the stereoscopic channels in each case is assigned a capturing module (52) of the digital image capturing unit (50) .

## Revendications

1. Procédé (200) permettant de produire une image numérique de résultat en utilisant un système de microscope (1) comportant des moyens (R, L, 41) permettant de produire des images microscopiques à différentes ouvertures numériques, ainsi qu'une unité numérique d'acquisition d'images (50),
**caractérisé en ce que** le procédé consiste à acquérir, au moyen de l'unité numérique d'acquisition d'images (50), au moins deux images microscopiques à des ouvertures numériques différentes sous la forme d'images numériques individuelles, et à comparer les unes aux autres des zones d'image des images numériques individuelles se correspondant respectivement quant à leur netteté d'image, dans lequel les zones d'image des images numériques individuelles présentant la netteté d'image la plus élevée sont réunies pour former l'image numérique de résultat.

2. Procédé (200) selon la revendication 1, dans lequel la comparaison des différentes zones d'image des images numériques individuelles quant à leur netteté d'image est effectuée en utilisant au moins une valeur caractérisant la netteté d'image.

3. Procédé (200) selon la revendication 1 ou 2, dans lequel les zones d'image se correspondant mutuellement des images numériques individuelles sont déterminées sur la base d'une position prédéterminée dans lesdites au moins deux images numériques individuelles.

4. Procédé (200) selon la revendication 3, dans lequel la position prédéterminée est définie sous la forme de coordonnées d'image identiques et/ou de zones de pixels identiques dans lesdites au moins deux images numériques individuelles.

5. Procédé (200) selon l'une des revendications précédentes, dans lequel les zones d'image se correspondant mutuellement des images numériques individuelles sont déterminées sur la base d'une reconnaissance du contenu de l'image.

6. Procédé (200) selon l'une des revendications précédentes, consistant à régler au moins un diaphragme d'ouverture (41) dans au moins un canal optique (L, R) du système de microscope (1) afin de produire lesdites au moins deux images microscopiques individuelles aux différentes ouvertures numériques.

7. Procédé (200) selon l'une des revendications précédentes, consistant à produire et à acquérir simultanément au moins deux images microscopiques individuelles aux différentes ouvertures numériques au moyen de deux canaux optiques (L, R) présentant chacun une ouverture numérique fixe.

8. Procédé (200) selon l'une des revendications précédentes, qui est répété pour au moins deux réglages de mise au point différents d'un objectif principal (21) du système de microscope (1), de manière à obtenir respectivement une image de résultat pour chacun desdits au moins deux réglages de mise au point différents.

9. Système de microscope (1) qui comporte des moyens (R, L, 41) permettant de produire des images microscopiques à différentes ouvertures numériques ainsi qu'une unité numérique d'acquisition d'images (50) et qui est conçu pour mettre en œuvre un procédé (200) selon l'une des revendications précédentes.

10. Système de microscope (1) selon la revendication 9, dans lequel les moyens (L, R, 41) permettant de produire les images microscopiques aux différentes ouvertures numériques comprennent au moins un canal optique (L, R) présentant un diaphragme d'ouverture (41) dont l'ouverture de diaphragme est réglable.

11. Système de microscope (1) selon la revendication 9, dans lequel les moyens (L, R) permettant de produire les images microscopiques aux différentes ouvertures numériques comprennent deux canaux optiques (L, R) présentant des ouvertures numériques différentes et/ou réglables.

12. Système de microscope (1) selon la revendication 10, comportant un dispositif de commande (80) permettant de commander l'unité numérique d'acquisition d'images (50) de manière à ce que l'unité numérique d'acquisition d'images (50) acquière au moins deux images numériques individuelles à différentes ouvertures de diaphragme d'ouverture du diaphragme d'ouverture (41) dans ledit au moins un canal optique (L, R).

13. Système de microscope (1) selon la revendication 12, dans lequel le dispositif de commande (80) est conçu pour prédéfinir respectivement un nombre d'images numériques à acquérir et une valeur de réglage pour le diaphragme d'ouverture (41) dans ledit au moins un canal optique (L, R) et pour effectuer alternativement une acquisition des images numériques au moyen du dispositif numérique d'acquisition d'images (50) et un réglage du diaphragme d'ouverture (41) selon la valeur de réglage.

14. Système de microscope (1) selon l'une des revendications 9 à 14, qui est réalisé sous la forme d'un stéréomicroscope comportant deux canaux stéréoscopiques (L, R), dans lequel un module d'acquisition (52) respectif de l'unité numérique d'acquisition d'images (50) est associé à chacun des canaux stéréoscopiques.
